# EUROPÄISCHE PATENTSCHRIFT

(11) **EP 3 032 172 B1**
(45) Veröffentlichungstag und Bekanntmachung des Hinweises auf die Patenterteilung: **01.05.2019**
(21) Anmeldenummer: 15003504.6
(22) Anmeldetag: 09.12.2015
(51) Int. Cl.: F23G 5/12, F23G 7/06, F23L 15/04

(54) **THERMISCHE NACHVERBRENNUNGS-ANLAGE**
THERMAL AFTERBURNING INSTALLATION
INSTALLATION DE POSTCOMBUSTION THERMIQUE

(30) Priorität: 09.12.2014 DE 102014018178
(43) Veröffentlichungstag der Anmeldung: 15.06.2016
(73) Patentinhaber: Eisenmann SE, 71032 Böblingen (DE)
(72) Erfinder: Strobel, Volker, 71144 Steinenbronn (DE)
(74) Vertreter: Ostertag & Partner Patentanwälte mbB

(56) Entgegenhaltungen:
- EP-A1- 0 854 323
- DE-A1-102010 012 006
- DE-U1- 20 219 277
- FR-A1- 2 556 446
- US-A- 4 357 991
- US-A- 5 709 542

## Beschreibung

Die Erfindung betrifft eine thermische Nachverbrennungsanlage mit
a) einer Brennkammer, welche ihrerseits umfasst:
   aa) einen Brennraum, welchem Abluft zuführbar ist;
   ab) einen Brenner, durch welchen der Brennraum aufheizbar ist, wodurch Reinluft entsteht;
   ac) einen Einlass für Abluft;
   ad) einen Auslass für Reinluft;
b) einem Strömungsweg, der den Einlass mit dem Brennraum verbindet;
c) einem Wärmetauschersystem, welchem als Wärmetauschermedium zumindest ein Teil der erzeugten und heißen Reinluft zuführbar ist und durch welches Abluft, die durch den Strömungsweg strömt, erwärmbar ist.

Eine thermische Nachverbrennungsanlage gemäß dem Oberbegriff des Anspruchs 1 ist aus DE2010012006A bekannt.

Solche thermischen Nachverbrennungsanlagen sind vom Markt her bekannt und werden insbesondere bei Prozessen eingesetzt, bei denen Abluft entsteht, die flüchtige organische Bestandteile, so genannte "volatile organic components", kurz VOC, mit sich führt. Die Reinigung dieser Abluft erfolgt durch eine thermische Nachverbrennung, bei welcher die Abluft in dem Brennraum erhitzt und die Verunreinigungen oxidiert werden.

Mit Blick auf die Energiebilanz der Anlage und die Effektivität der Verbrennung hat es sich dabei etabliert, die Abluft auf ihrem Strömungsweg zur Brennkammer vorzuwärmen.

Es ist nun Aufgabe der Erfindung, eine Anlage der eingangs genannten Art zu verbessern.

Diese Aufgabe wird bei einer Anlage gemäss dem Gegenstand des Anspruchs 1 gelöst.

Auf diese Weise ist die Möglichkeit eröffnet, dass sich der Strömungsweg quasi mäanderförmig erstreckt, wodurch die nutzbare Weglänge, entlang welcher eine Wärmeübertragung auf die Abluft erfolgen kann, vergrößert wird, ohne dass hierfür eine Vergrößerung der Längserstreckung der Anlage notwendig wird. Dadurch, dass die Strömungsabschnitte und die Wärmetauscherrohre stets ineinander verschachtelt sind, erfolgt die Wärmeübertragung im ersten und im zweiten Strömungsabschnitt mit großer Effektivität.

Es ist günstig, wenn einer, zwei oder alle der Strömungsabschnitte durch Ringräume ausgebildet sind, welche den Brennraum radial umgeben.

Vorzugsweise sind dann wenigstens zwei Ringräume vorhanden, die radial benachbart angeordnet sind und zwischen denen eine Zwischenwand vorhanden ist. Auf diese Weise sind die Ringräume in radialer Richtung so dicht wie möglich benachbart, was dem Wunsch nach einem geringen Raumbedarf der Anlage in radialer Richtung Rechnung trägt.

Bei einer vorteilhaften alternativen Ausbildung sind wenigstens der erste und der zweite Strömungsabschnitt durch alternierend nebeneinander angeordnete Strömungskanäle ausgebildet, die durch Kammerwände in Längsrichtung des Gehäuses getrennt sind und den Brennraum radial umgeben. Statt in radialer Richtung nebeneinander sind die Strömungsabschnitte hier also in Umfangsrichtung benachbart angeordnet.

Um in gewissem Umfange Einfluss auf die Strömungsverhältnisse und die Wärmeübertragung nehmen zu können, wird erfindungsgemäß vorgeschlagen, dass die Anzahl und/oder der Durchmesser und/oder die Ausbildung der Wärmetauscherrohre im ersten Strömungsabschnitt und der Wärmetauscherrohre im zweiten Strömungsabschnitt unterschiedlich sind. Durch die Anzahl und die Querschnitte der Wärmetauscherrohre können unterschiedliche Strömungsgeschwindigkeiten in den einzelnen Strömungsabschnitten eingestellt werden. Dies beeinflusst zugleich die Wärmeübertragung zwischen den Medien.

Um die Abluft insbesondere am Beginn ihres Strömungsweges noch effektiver zu erwärmen, kann das Wärmetauschersystem vorteilhaft einen Wärmetauscherringraum mit einem Einlassanschluss und einem Auslassanschluss umfassen, welcher den ersten Strömungsabschnitt radial außen umgibt und welchem ein von der Reinluft verschiedenes Wärmetauschermedium zuführbar ist.

Nachfolgend werden Ausführungsbeispiele der Erfindung anhand der Zeichnungen näher erläutert. Es zeigen
- Figur 1: einen Längsschnitt einer thermischen Nachverbrennungsanlage gemäß einem Ausführungsbeispiel, das nicht Teil der Erfindung ist, entlang der Schnittlinie I-I von Figur 2;
- Figur 2: einen Querschnitt der thermischen Nachverbrennungsanlage von Figur 1 entlang der dortigen Schnittlinie II-II;
- Figur 3: einen der Figur 2 entsprechenden Querschnitt einer thermischen Nachverbrennungsanlage gemäß einem ersten Ausführungsbeispiel der Erfindung;
- Figur 4: einen den Figuren 2 und 3 entsprechenden Querschnitt einer thermischen Nachverbrennungsanlage gemäß einem zweiten Ausführungsbeispiel;
- Figur 5: einen der Figur 1 entsprechenden Längsschnitt einer thermischen Nachverbrennungsanlage gemäß einem dritten Ausführungsbeispiel.

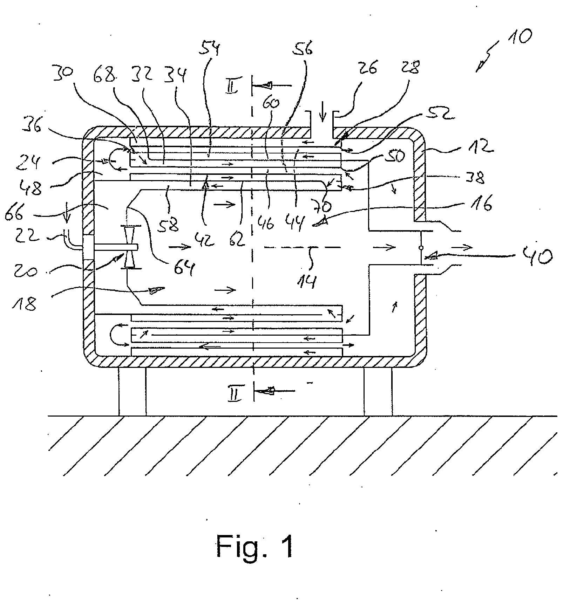

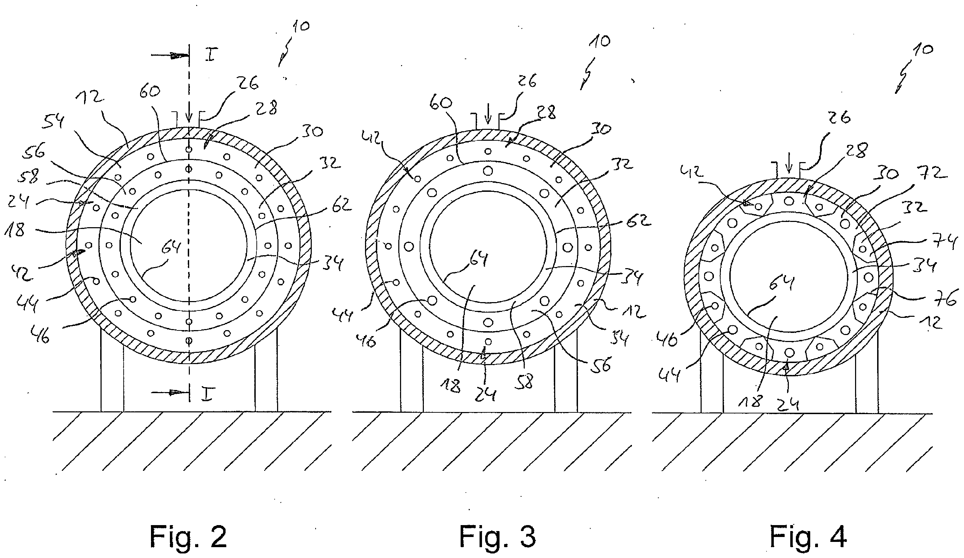

Zunächst wird auf die Figuren 1 und 2 Bezug genommen; diese zeigen schematisch eine thermische Nachverbrennungsanlage 10 mit einem Außengehäuse 12, welches eine Längsachse 14 definiert und in welchem eine Brennkammer 16 mit einem Brennraum 18 untergebracht ist.

Der Brennraum 18 bzw. die sich darin befindliche Atmosphäre kann mit Hilfe eines Brenners 20 auf eine bestimmte Temperatur erhitzt werden. Hierfür wird dem Brenner 20 über eine Brennstoffleitung 22 ein Brenngas oder ein flüssiger Brennstoff zugeführt.

Dem Brennraum 18 wird zu reinigende und mit Schadstoffen beladene Abluft über ein Kanalsystem 24 zugeführt, welches mit einem Einlass 26 am Außengehäuse 12 verbunden ist. Das Kanalsystem 24 umfasst einen Strömungsweg 28, der den Einlass 26 mit dem Brennraum 18 verbindet. Dieser Strömungsweg 28 umfasst beim vorliegenden Ausführungsbeispiel drei Strömungsabschnitte 30, 32 und 34, welche von der Abluft mit entgegengesetzter Strömungsrichtung durchströmt werden. Der erste Strömungsabschnitt 30 erstreckt sich von dem Einlass 26 zu einem erstem Umlenkende 36, welches den ersten Strömungsabschnitt 30 mit dem zweiten Strömungsabschnitt 32 verbindet. Der zweite Strömungsabschnitt 32 erstreckt sich von dem ersten Umlenkende 36 zu einem zweiten Umlenkende 38, welches seinerseits den zweiten Strömungsabschnitt 32 mit dem dritten Strömungsabschnitt 34 verbindet. Von dem dritten Strömungsabschnitt 34 strömt die Abluft schließlich weiter zum Brennraum 18. Dabei kann der dritte Strömungsabschnitt 34 unmittelbar in den Brennraum 18 münden oder es folgen noch weitere Abschnitte des Strömungsweges 28.

Die Strömungsabschnitte 30, 32, 34 sind derart über die Umlenkenden 36, 38 miteinander verbunden, dass die Abluft zwei aufeinanderfolgende Strömungsabschnitte 30 und 32 oder 32 und 34 mit unterschiedlichen Strömungsrichtungen durchströmt. Die Strömungsrichtungen in zwei benachbarten Strömungsabschnitten 30, 32 bzw. 32, 34 sind bei der Erfindung entgegengesetzt und jeweils durch Pfeile veranschaulicht.

In der Brennkammer 18 wird die zugeführte Abluft erhitzt, wobei enthaltende Schadstoffe verbrannt werden und Reinluft entsteht. Die Reinluft kann dann durch einen Auslass 40 aus der Brennkammer 16 ausströmen, dessen Strömungsquerschnitt durch eine nicht eigens mit einem Bezugszeichen versehene Klappe eingestellt werden kann.

Es ist ein Wärmetauschersystem 42 vorhanden, welchem als Wärmetauschermedium zumindest ein Teil der erzeugten und heißen Reinluft zugeführt werden kann und durch welches zumindest Abluft, die durch den ersten und den zweiten Strömungsabschnitt 30 bzw. 32 strömt, erwärmt werden kann.

Hierzu verlaufen in dem ersten Strömungsabschnitt 30 für die Abluft Wärmetauscherrohre 44 und in dem zweiten Strömungsabschnitt 32 für die Abluft Wärmetauscherrohre 46, welche von Reinluft durchströmt und von der durch die jeweiligen Strömungsabschnitte 30, 32 strömenden Abluft überströmt werden, so dass Wärme von der Reinluft auf die Abluft übertragen wird. In den Figuren 2 bis 4 ist von den jeweiligen Wärmetauscherrohren 44, 46 jeweils nur eines mit einem Bezugszeichen versehen.

Hier bilden folglich die Wände der Wärmetauscherrohre 44, 46 eine Wärmetauscherfläche zur Abluft aus und werden auf ihrer radialen Innenfläche in axialer Richtung von der heißen Reinluft überströmt. Bei einer nicht eigens gezeigten Abwandlung können die Verhältnisse auch umgekehrt sein und es können der erste Strömungsabschnitt 30 innerhalb eines ersten Wärmetauscherrohres und der zweite Strömungsabschnitt 32 innerhalb eines zweiten Wärmetauscherrohres verlaufen. Bei dieser Variante bildet dann die jeweilige Wand der Strömungsabschnitte 30, 32 eine Wärmetauscherfläche zur Abluft und wird ihrer radialen Außenfläche von Reinluft überströmt.

Bezogen auf die Strömungsrichtungen der Abluft in den Strömungsabschnitten 30, 32 und der Reinluft in den Wärmetauscherrohren 44, 46 arbeitet das Wärmetauschersystem 42 nach dem Gegenstromprinzip, so dass die Wärmetauscherrohre 44, 46 bezogen auf die Strömungsrichtung der Abluft in dem jeweiligen Strömungsabschnitt 30, 32 in dazu entgegengesetzte Richtung von Reinluft durchströmt werden. Zu diesem Zweck sind die Wärmetauscherrohre 44, 46 durch einen Umlenkkanal 48 miteinander verbunden. Alternativ können die Wärmetauscherrohre 44, 46 auch durch gebogene Rohrstücke miteinander verbunden sein.

Den Wärmetauscherrohren 44, 46 wird die Reinluft durch einen jeweiligen Wärmetauschereinlass 50 zugeführt, welche sich am zweiten Umlenkende 38 befinden. Die Wärmetauscherrohre 46 münden in einen jeweiligen Wärmetauscherauslass 52, der sich in Längsrichtung gesehen auf Höhe des Einlasses 26 befindet.

Beim in den Figuren 1 und zwei gezeigten Ausführungsbeispiel sind die Strömungsabschnitte 30, 32, 34 durch in radialer Richtung benachbarte Ringräume 54, 56 bzw. 58 gebildet, welche den Brennraum 18 radial umgeben. Die Ringräume 54, 56, 58 sind an den Stirnseiten geschlossen. Der erste Ringraum 54 ist radial außen durch das Gehäuse 1 begrenzt. Zwischen dem ersten Ringraum 54 und dem zweiten Ringraum 56 ist eine Zwischenwand 60 vorhanden. Zwischen dem zweiten Ringraum 56 und dem dritten Ringraum 58 ist eine weitere Zwischenwand 62 vorhanden. Der dritte Ringraum 58 ist radial Innen durch einen Abschnitt einer Brennraumwand 64 begrenzt und mündet in einen Zuführraum 66, welcher zum Brennraum 18 führt.

Die Zwischenwand 60 weist beim ersten Umlenkende 36 in Umfangsrichtung eine Anzahl von Durchgangsöffnungen 68 auf, welche den ersten Ringraum 54 mit dem zweiten Ringraum 56 verbinden. In entsprechender Weise weist die weitere Zwischenwand 62 beim zweiten Umlenkende 38 in Umfangsrichtung eine Anzahl von Durchgangsöffnungen 70 auf, welche den zweiten Ringraum 56 mit dem dritten Ringraum 58 verbinden.

Wie in Figur 2 zu erkennen ist, erstrecken sich die Wärmetauscherrohre 44 durch den ersten Ringraum 54 und sind in Umfangsrichtung regelmäßig verteilt angeordnet. Durch den zweiten Ringraum 56 erstrecken sich in entsprechender Weise die Wärmetauscherrohre 46.

Wenn die Abluft nun die drei Strömungsabschnitte 30, 32 und 34 auf ihrem Weg zur Brennkammer 18 durchströmt, wird sie sukzessive erwärmt, da die frisch erzeugte Reinluft mit der höchsten Temperatur in die Wärmetauscherrohre 46 im zweiten Ringraum 56 einströmt und sich auf dem Weg zum Wärmetauscherrohr 44 im ersten Ringraum 54 und durch dieses hindurch abkühlt, so dass die Reinluft das Wärmetauschersystem 42 an den Wärmetauscherauslässen 52 mit der geringsten Temperatur verlässt.

Auf diese Weise wird die in den Strömungsweg 32 einströmende Abluft zunächst von der kühlsten Reinluft im Wärmetauschersystem 42 erwärmt und nimmt auf dem weiteren Strömungsweg 32 die Wärme von kontinuierlich heißerer Reinluft auf, so das die Abluft die Brennkammer 18 mit höchster Temperatur erreicht.

Beim Ausführungsbeispiel nach den Figuren 1 und 2 welche nicht Teil der Erfindung sind, sind die Wärmetauscherrohre 44 im ersten Ringraum 54 und die Wärmetauscherrohre 46 im zweiten Ringraum 56 in ihrem Durchmesser, ihrer Dimensionierung und Anordnung identisch.

Bei einem in Figur 3 Ausführungsbeispiel sind weniger Wärmetauscherrohre 46 im zweiten Ringraum 56 vorhanden als Wärmetauscherrohre 44 im ersten Ringraum 54. Zugleich sind die Durchmesser der Wärmetauscherrohre 46 im zweiten Ringraum 56 größer als die Durchmesser der Wärmetauscherrohre 44 im ersten Ringraum 54.

Dies kann so aufeinander abgestimmt sein, dass die Strömungs- und Wärmeübertragungsparameter in den beiden Ringräume 54, 56 dennoch einander entsprechen.

Allgemein ausgedrückt sind die Anzahl und/oder der Durchmesser und/oder die Ausbildung der Wärmetauscherrohre 44 im ersten Strömungsabschnitt 30 und der Wärmetauscherrohre 46 im zweiten Strömungsabschnitt 32 unterschiedlich. Zu verschiedenen Ausbildungen zählen alle strukturellen Eigenschaften der Wärmetauscherrohre, wie beispielsweise unterschiedliche Wandstärken der Rohre, die für Rohre verwendeten Materialien sowie die geometrische Struktur der Rohrwände und dergleichen.

Figur 4 zeigt ein zweites Ausführungsbeispiel, bei welchem der erste und der zweite Strömungsabschnitt 30, 32 nicht als Ringräume, sondern als in Umfangsrichtung alternierend nebeneinander angeordnete Strömungskanäle 72, 74 ausgebildet sind, die durch Kammerwände 76 in Längsrichtung des Gehäuses 12 getrennt sind und den Brennraum 18 radial umgeben. Dabei definieren die Strömungskanäle 72 den ersten Strömungsabschnitt 30 und die Strömungskanäle 74 den zweiten Strömungsabschnitt 32. In jedem Strömungskanal 72 verläuft ein Wärmetauscherrohr 44 und in jedem Strömungskanal 74 verläuft ein Wärmetauscherrohr 46.

Beim vorliegenden Ausführungsbeispiel haben die Strömungskanäle 72 einen größeren Querschnitt als die Strömungskanäle 74. Damit in einem solchen Fall die Strömungs- und Wärmeübertragungsparameter gegenüber gleichen Kanalquerschnitten unverändert bleiben, haben die Wärmetauscherrohre 44 in den Strömungskanälen 72 einen größeren Querschnitt als die Wärmetauscherrohre 46 in den Strömungskanälen 74.

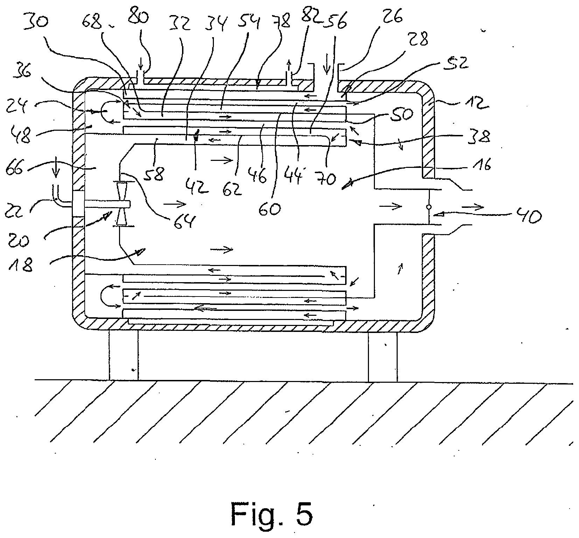

Figur 5 zeigt ein drittes Ausführungsbeispiel einer thermischen Nachverbrennungsanlage 10, welche weitgehend der Nachverbrennungsanlage 10 gemäß dem ersten Ausführungsbeispiel nach den Figuren 1 und 2 entspricht. Ergänzend umfasst das Wärmetauschersystem 42 dort einen Wärmetauscherringraum 78 mit einem Einlassanschluss 80 und einem Auslassanschluss 82, welcher den ersten Strömungsabschnitt 30, hier in Form des Ringraums 54, radial außen umgibt und welchem ein von der Reinluft verschiedenes Wärmetauschermedium zugeführt werden kann.

Auf diese Weise kann der Außenmantel des Gehäuses 12 besser gekühlt werden, um geringere Oberflächentemperaturen in der isolierten Außenfläche der Anlage 10 zu erreichen. Wenn der Auslassanschluss 82 mit dem Ablufteinlass 26 konstruktiv und strömungstechnisch verbunden wird, kann der Wärmetauscherringraum 78 als Abluft durchströmter Kühlmantel fungieren. In diesem dient als die Abluft als Wärmetauschermedium, welches von der Reinluft verschieden ist.

## Patentansprüche

1. Thermische Nachverbrennungsanlage mit
a) einer Brennkammer (16), welche ihrerseits umfasst:
aa) einen Brennraum (18), welchem Abluft zuführbar ist;
ab) einen Brenner (20), durch welchen der Brennraum (18) aufheizbar ist, wodurch Reinluft entsteht;
ac) einen Einlass (26) für Abluft;
ad) einen Auslass (40) für Reinluft;
b) einem Strömungsweg (28), der den Einlass (26) mit dem Brennraum (18) verbindet;
c) einem Wärmetauschersystem (42), welchem als Wärmetauschermedium zumindest ein Teil der erzeugten und heißen Reinluft zuführbar ist und durch welches Abluft, die durch den Strömungsweg (28) strömt, erwärmbar ist;
wobei
d) der Strömungsweg (28) einen ersten, zweiten und dritten Strömungsabschnitt (30, 32, 34) umfasst, wobei der erste Strömungsabschnitt (30) mit dem Einlass (26) verbunden ist und die Abluft von dem dritten Strömungsabschnitt (34) weiter zum Brennraum (18) strömt, wobei die Strömungsabschnitte (30, 32, 34) an Umlenkenden (36, 38) derart miteinander verbunden sind, dass die Abluft zwei aufeinanderfolgende Strömungsabschnitte (30, 32; 32, 34) mit entgegengesetzten Strömungsrichtungen durchströmt;
und
e) wenigstens innerhalb des ersten und des zweiten Strömungsabschnitts (30, 32) Wärmetauscherrohre (44, 46) verlaufen
oder
f) wenigstens der erste und der zweite Strömungsabschnitt (30, 32) innerhalb von Wärmetauscherrohren (44, 46) verlaufen,
**dadurch gekennzeichnet, dass**
g) die Anzahl und/oder der Durchmesser und/oder die Ausbildung der Wärmetauscherrohre (44) im ersten Strömungsabschnitt (30) und der Wärmetauscherrohre (46) im zweiten Strömungsabschnitt (32) unterschiedlich sind.

2. Thermische Nachverbrennungsanlage nach Anspruch 1, **dadurch gekennzeichnet, dass** einer, zwei oder alle der Strömungsabschnitte (30, 32, 34) durch Ringräume (54, 56, 58) ausgebildet sind, welche den Brennraum (18) radial umgeben.

3. Thermische Nachverbrennungsanlage nach Anspruch 2, **dadurch gekennzeichnet, dass** wenigstens zwei Ringräume (54, 56, 58) vorhanden sind, die radial benachbart angeordnet sind und zwischen denen eine Zwischenwand (60, 62) vorhanden ist.

4. Thermische Nachverbrennungsanlage nach Anspruch 1, **dadurch gekennzeichnet, dass** wenigstens der erste und der zweite Strömungsabschnitt (30, 32) durch alternierend nebeneinander angeordnete Strömungskanäle (72, 74) ausgebildet sind, die durch Kammerwände (76) in Längsrichtung des Gehäuses (12) getrennt sind und den Brennraum (18) radial umgeben.

5. Thermische Nachverbrennungsanlage nach einem der Ansprüche 1 bis 4, **dadurch gekennzeichnet, dass** das Wärmetauschersystem (42) einen Wärmetauscherringraum (78) mit einem Einlassanschluss (80) und einem Auslassanschluss (82) umfasst, welcher den ersten Strömungsabschnitt (30) radial außen umgibt und welchem ein von der Reinluft verschiedenes Wärmetauschermedium zuführbar ist.

## Claims

1. A thermal post-combustion unit having
a) a combustion chamber (16) which in turn comprises:
aa) a combustion space (18) to which exhaust air can be supplied;
ab) a burner (20) by means of which the combustion space (18) can be heated, whereby clean air is produced;
ac) an inlet (26) for exhaust air;
ad) an outlet (40) for clean air;
b) a flow path (28) which connects the inlet (26) to the combustion space (18);
c) a heat exchanger system (42), to which at least some of the generated and hot clean air can be supplied as a heat-exchanger medium and by means of which exhaust air which flows through the flow path (28) can be heated;
wherein
d) the flow path (28) comprises a first, second and third flow section (30, 32, 34), wherein the first flow section (30) is connected to the inlet (26) and the exhaust air flows from the third flow section (34) further to the combustion space (18), wherein the flow sections (30, 32, 34) are connected to one another at diversion ends (36, 38) in such a way that the exhaust air flows through two successive flow sections (30, 32; 32, 34) with opposite flow directions;
and
e) heat-exchanger pipes (44, 46) extend at least inside the first and the second flow section (30, 32)
or
f) at least the first and the second flow section (30, 32) extend inside heat-exchanger pipes (44, 46),
**characterized in that**
g) the number and/or the diameter and/or the design of the heat-exchanger pipes (44) in the first flow section (30) and the heat-exchanger pipes (46) in the second flow section (32) are different.

2. A thermal post-combustion unit according to Claim 1, **characterized in that** one, two or all of the flow sections (30, 32, 34) are formed by annular spaces (54, 56, 58) which surround the combustion space (18) radially.

3. A thermal post-combustion unit according to Claim 2, **characterized in that** there are at least two annular spaces (54, 56, 58), which are arranged radially adjacent and between which there is an intermediate wall (60, 62).

4. A thermal post-combustion unit according to Claim 1, **characterized in that** at least the first and the second flow section (30, 32) are formed by flow channels (72, 74) which are arranged alternately next to one another, which are separated by chamber walls (76) in the longitudinal direction of the housing (12) and surround the combustion space (18) radially.

5. A thermal post-combustion unit according to one of Claims 1 to 4, **characterized in that** the heat-exchanger system (42) comprises a heat-exchanger annular space (78) having an inlet connection (80) and an outlet connection (82), which radially surrounds the first flow section (30) externally and which can be supplied with a heat-exchanger medium which is different from the clean air.

## Revendications

1. Installation de postcombustion thermique comprenant
a) une chambre de combustion (16) qui elle-même comprend :
aa) un espace de combustion (18) auquel de l'air vicié peut être amené ;
ab) un brûleur (20) au moyen duquel l'espace de combustion (18) peut être chauffé, de sorte que de l'air propre est produit ;
ac) une entrée (26) pour l'air vicié ;
ad) une sortie (40) pour l'air propre ;
b) un chemin d'écoulement (28) qui relie l'entrée (26) à l'espace de combustion (18) ;
c) un système d'échange de chaleur (42) auquel au moins une partie de l'air propre chaud produit peut être amenée en tant que milieu d'échange de chaleur et par lequel l'air vicié qui circule à travers le chemin d'écoulement (28) peut être chauffé ;
dans laquelle
d) le chemin d'écoulement (28) comprend une première, une deuxième et une troisième section d'écoulement (30, 32, 34), la première section d'écoulement (30) étant reliée à l'entrée (26) et l'air vicié s'écoulant de la troisième section d'écoulement (34) vers l'espace de combustion (18), les sections d'écoulement (30, 32, 34) étant reliées entre elles à des extrémités déflectrices (36, 38) de telle sorte que l'air vicié traverse deux sections d'écoulement successives (30, 32 ; 32, 34) avec des sens d'écoulement opposés ;
et
e) des tubes d'échange de chaleur (44, 46) s'étendent au moins à l'intérieur de la première et de la deuxième section d'écoulement (30, 32)
ou
f) au moins la première et la deuxième section d'écoulement (30, 32) s'étendent à l'intérieur de tubes d'échange de chaleur (44, 46),
**caractérisée en ce que**
g) le nombre et/ou le diamètre et/ou la configuration des tubes d'échange de chaleur (44) dans la première section d'écoulement (30) et des tubes d'échange de chaleur (46) dans la deuxième section d'écoulement (32) sont différents.

2. Installation de postcombustion thermique selon la revendication 1, **caractérisée en ce qu'**une, deux ou toutes les sections d'écoulement (30, 32, 34) sont formées par des espaces annulaires (54, 56, 58) qui entourent radialement l'espace de combustion (18).

3. Installation de postcombustion thermique selon la revendication 2, **caractérisée en ce qu'**il existe au moins deux espaces annulaires (54, 56, 58) qui sont disposés de manière adjacente radialement et entre lesquels se trouve une paroi intermédiaire (60, 62).

4. Installation de postcombustion thermique selon la revendication 1, **caractérisée en ce qu'**au moins la première et la deuxième section d'écoulement (30, 32) sont formées par des canaux d'écoulement (72, 74) disposés alternativement côte à côte, qui sont séparés par des parois de chambre (76) dans la direction longitudinale du carter (12) et entourent radialement l'espace de combustion (18).

5. Installation de postcombustion thermique selon l'une des revendications 1 à 4, **caractérisée en ce que** le système d'échange de chaleur (42) comprend un espace annulaire d'échange de chaleur (78) avec un raccord d'entrée (80) et un raccord de sortie (82), qui entoure radialement à l'extérieur la première section d'écoulement (30) et auquel un milieu d'échange de chaleur différent de l'air propre peut être amené.
